(19) Europäisches Patentamt
European Patent Office
Office européen des brevets

(11) **EP 2 065 231 A1**

(12) **EUROPEAN PATENT APPLICATION**

(43) Date of publication:
**03.06.2009 Bulletin 2009/23**

(51) Int Cl.:
**B60G 17/015** (2006.01)          **B60G 21/055** (2006.01)
**B62D 5/07** (2006.01)

(21) Application number: **07121985.1**

(22) Date of filing: **30.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor Toegepast-Natuurwetenschappelijk Onderzoek TNO**
**2628 VK  Delft (NL)**

(72) Inventors:
• **van der Knaap, Albertus Clemens Maria**
  **5706 KX Helmond (NL)**

• **Verschuren, Robert Marijn Anthony Frank**
  **5643 PG Eindhoven (NL)**
• **Vandenhoudt, Jeroen**
  **5751 CE Deurne (NL)**
• **Wouters, Ronny Maria Theophilus**
  **6367 JA Ubachsberg (NL)**
• **Tinsel, Raymond Bernardus Gerhardus**
  **5623 MV Eindhoven (NL)**

(74) Representative: **Hatzmann, Martin**
**Vereenigde**
**Johan de Wittlaan 7**
**2517 JR Den Haag (NL)**

(54) **Active roll stabilisation assembly fed by power steering pumping means, an active flow divider, an active flow regulator and a vehicle comprising such an active roll stabilisation assembly.**

(57)    Active roll stabilisation system (1) for use in a vehicle, comprising an adjustable torsion bar (27) adjustable by means of a hydraulic actuator (2) and a hydraulic system (3) for actuating said actuator (2), the hydraulic system (3) comprising hydraulic fluid lines (4,5) in fluid connection with said hydraulic actuator (2) and a hydraulic pumping means (7) for feeding said hydraulic actuator (2), wherein the hydraulic pumping means (7) is a hydraulic pumping means that is incorporated in a hydraulic system (16) of a power steering system (15) arranged in said vehicle. The invention further relates to an active flow divider (9c), and active flow regulator (9d) and to a vehicle comprising the above-mentioned active roll stabilisation system.

Fig. 1

EP 2 065 231 A1

**Description**

The invention relates to an active roll stabilisation system (ARS system) for use in a vehicle, comprising an adjustable torsion bar adjustable by means of a hydraulic actuator and a hydraulic system comprising a hydraulic pumping means in fluid connection with said hydraulic actuator for feeding said hydraulic actuator.

Such active roll stabilisation systems are known in the automotive industry. A known active roll stabilisation system is for instance disclosed in EP 1,175,307. The known active roll stabilisation system is arranged in a vehicle, such as a car or a truck, and comprises an adjustable torsion bar with an actuator arranged to adjust a torsion angle and/or a torsion moment of the torsion bar to counteract external roll motions and/or roll moments. External roll motions and/or roll moments may act on said system during use of the vehicle, for instance when the vehicle turns. To be able to adjust the torsion angle and/or the torsion moment of the adjustable torsion bar, the actuator is fed with hydraulic fluid from a reservoir by means of a hydraulic pumping means. To be able to feed the actuator, the hydraulic pumping means enables a transformation from mechanical rotational energy that is provided by a motor driving said hydraulic pumping means into hydraulic energy. Such energy transformation may result in transformation losses. Furthermore, such an active roll stabilisation system is a complex system and needs a considerable amount of built-in space in a vehicle.

Therefore, the present invention aims to provide an active roll stabilisation system of the above-described type, wherein the disadvantages of the known active roll stabilisation systems are at least partly overcome. More particular, it is an object of the invention to provide an active roll stabilisation system that is energy efficient. Another object of the invention is to provide an active roll stabilisation system that is less complex than the known active roll stabilisation systems.

To that end an active roll stabilisation system according to the invention is **characterized in that** the hydraulic pumping means is a hydraulic pumping means that is incorporated in a hydraulic system of a power steering system arranged in said vehicle. By combining the hydraulic system of the active roll stabilisation system and the hydraulic system of the power steering system of a vehicle, only one hydraulic pumping means is necessary to be able to feed the actuator of both systems. This results in only one transformation operation from mechanical rotational energy into hydraulic energy for two separate systems. Consequently, the total transformation losses of the vehicle are reduced considerably, which means a reduction in the needed energy, thus a reduction in fuel costs. Furthermore, by using the hydraulic pumping means of the power steering assembly, the vehicle is provided with a relatively compact hydraulic system. This offers much design freedom as to potential built-in locations and also to the overall vehicle design. Additionally, because the hydraulic system will be less complex, the system may be easier to manufacture and assemble, which is advantageous with respect to the manufacturing costs.

According to a further elaboration of the invention, the hydraulic pumping means is in fluid connection with the actuator of the active roll stabilisation system and in fluid connection with an actuator of the power steering system, wherein the hydraulic pumping means is arranged for feeding hydraulic fluid to the active roll stabilisation system as well as to the power steering system. In order to supply both systems with the demanded amount of hydraulic fluid in order to feed the respective actuator accordingly, a flow divider or a flow regulator may be provided in the fluid connection between the hydraulic pumping means and the active roll stabilisation system and the power steering system for dividing or respectively regulating hydraulic fluid flows to said systems. A flow divider may be, according to a further elaboration of the invention, a passive flow divider adapted for dividing the hydraulic fluid with a fixed division ratio between the active roll stabilisation system and the power steering system. In this case the fixed division ratio is governed by the pressure drop ratio over two metering orifices that may be arranged in the passive flow divider provided in the fluid connections between the hydraulic pumping means and the respective systems. It is advantageous to use a passive flow divider in the combined active roll stabilisation and the power steering systems in case the hydraulic pumping means may supply sufficient hydraulic fluid to the passive flow divider, even when the hydraulic pumping means is driven at low speed. In a different embodiment of the invention, a flow regulator may be a passive flow regulator adapted for regulating the hydraulic fluid flow to one of the active roll stabilisation system or to the power steering system, wherein a surplus flow will be supplied to the other one of the active roll stabilisation system or the power steering system. The passive flow regulator may be arranged to always provide a minimum hydraulic fluid flow to the power steering system demanded for proper functioning of said system, even in case of a relative low hydraulic fluid supply to the passive flow regulator, thereby enhancing the safety of the vehicle. In this case, the surplus flow, being the total hydraulic fluid flow supplied by the hydraulic pumping means minus the regulated hydraulic fluid flow to the power steering system, will be supplied to the active roll stabilisation system.

According to an alternative advantageous embodiment of the invention, the flow divider may be an active flow divider adapted for dividing the hydraulic fluid with a variable division ratio between the active roll stabilisation system and the power steering system. Such an active flow divider may comprise a metering orifice in each respective fluid connection between the hydraulic pumping means and said respective systems, wherein at least one metering orifice is a controllable metering orifice. The desired flow ratio of the hydraulic fluid may be controlled by controlling the at least one metering orifice.

According to another advantageous embodiment of the invention, the flow regulator may be is an active flow regulator adapted for regulating the hydraulic fluid flow to one of the active roll stabilisation system or the power steering system, wherein a surplus flow will be supplied to the other one of the active roll stabilisation system or the power steering system. Such an active flow regulator may comprise a controllable metering orifice in one of the fluid connections between the hydraulic pumping means and the respective systems, preferably between the hydraulic pumping means and the power steering system. The use of an active flow divider or of an active flow regulator results in efficient use of the capacity of the hydraulic pumping means. In order to further increase the efficiency of the use of the hydraulic pumping means, the active flow divider or the active flow regulator may, according to another aspect of the invention, be controllable in dependence of driving speed of the vehicle, in dependence of pumping speed of the hydraulic pumping means and/or in dependence of steering speed. In case the flow divider or flow regulator is controlled in dependence of the driving speed of the vehicle, the hydraulic pumping means is enabled to provide a relatively large flow of hydraulic fluid to the actuator of the active roll stabilisation system when the vehicle is driving at a relatively high speed. When driving at a low speed, a large flow of hydraulic fluid may be fed to the actuator of the power steering system. When driving with a relatively high speed, the active roll stabilisation system may be adjusted continuously to provide a comfortable driving behaviour of the vehicle. On the contrary, when driving with a low speed, the comfort of driving the vehicle will be enhanced because the power steering system enables easy steering of the vehicle. Consequently, the hydraulic pumping means is used very efficient and provide the best flow ratio of the hydraulic fluid to the respective systems according to the desired use of said systems at a certain vehicle speed. It is of course possible that the active flow divider or the active flow regulator may be controlled in dependence of other vehicle properties.

It furthermore may be advantageous, according to another aspect of the invention, that the active flow divider or the active flow regulator is arranged to control the hydraulic supply flow to the power steering assembly. This enables an actively controllable power steering system.

The invention further relates to an active flow divider for use in a hydraulic system for supplying hydraulic fluid to a power steering system and an active roll stabilisation system, an active flow regulator for use in a hydraulic system for supplying hydraulic fluid to a power steering system and an active roll stabilisation system and to a vehicle comprising an active roll stabilisation system as above-mentioned. Such an active flow divider, such an active flow regulator and such a vehicle may provide similar advantages and effects as described above with the active roll stabilisation system.

Further advantageous embodiments of an active roll stabilisation system according to the invention and a vehicle provided therewith are set forth in the dependent claims.

To explain the invention, exemplary embodiments thereof will hereinafter be described with reference to the accompanying drawings, wherein:

> FIG. 1 schematically shows a first embodiment of an active roll stabilisation system fed by a hydraulic pumping means of a power steering system according to the invention;
> FIG. 2 schematically shows a second embodiment of an active roll stabilisation system fed by a hydraulic pumping means of a power steering system according to the invention;
> FIG. 3 schematically shows a third embodiment of an active roll stabilisation system fed by a hydraulic pumping means of a power steering system according to the invention;
> FIG. 4 schematically shows a fourth embodiment of an active roll stabilisation system fed by a hydraulic pumping means of a power steering system according to the invention;
> FIG. 5 schematically shows an active flow regulator as shown in the embodiment of FIG. 4;
> FIG. 6 schematically shows the embodiment of FIG. 4 using hydraulic pumping means of a power steering system of a truck; and
> FIG. 7 shows an embodiment of an active roll stabilisation system according to the invention, with an additional torsion bar at least partially surrounded by the adjustable torsion bar.

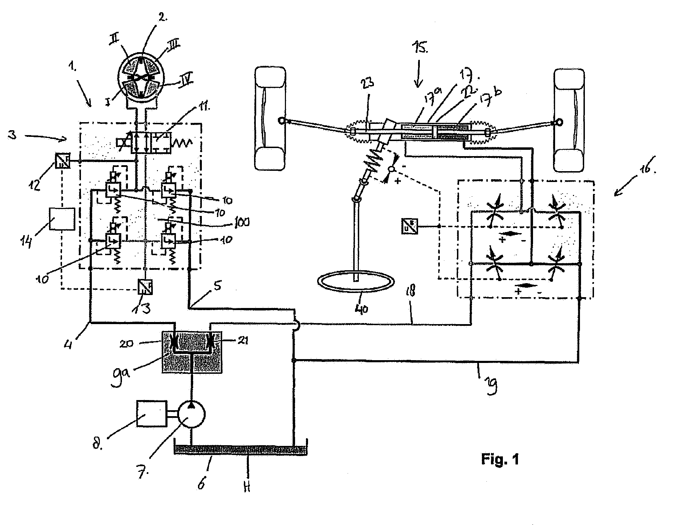

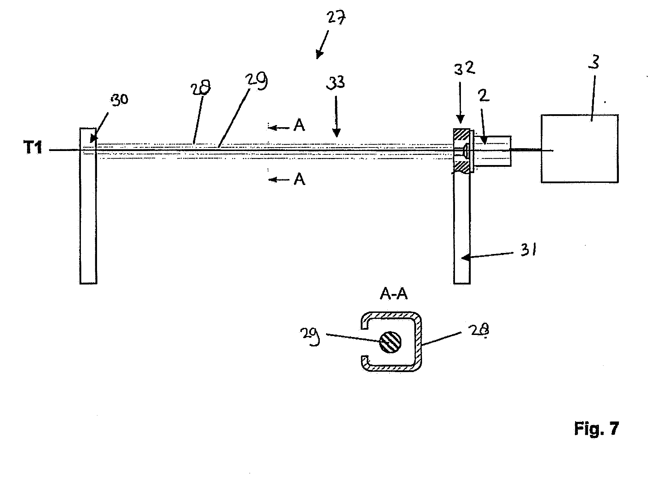

In Figure 1, a first embodiment of an active roll stabilisation 1 system according to the invention is schematically shown. The active roll stabilisation system 1 comprises a hydraulic rotation actuator 2 attached to an adjustable torsion bar 27 (see Figure 7) and a hydraulic system 3. The hydraulic rotation actuator 2 as shown in Figure 1 has four chambers I-IV, but in a different embodiment, the hydraulic rotation actuator 2 may comprise a different amount of chambers, for instance six chambers. The hydraulic rotation actuator 2 is linked to the hydraulic system 3 by means of a hydraulic supply line 4 and a hydraulic return line 5. The hydraulic system 3 further comprises a reservoir 6 containing hydraulic fluid H. Furthermore, the hydraulic system 3 comprises a hydraulic pumping means 7 arranged for circulating hydraulic fluid H between the reservoir 6 and the hydraulic rotation actuator 2, more particularly to feed hydraulic fluid H to the actuator 2, so as to enable the adjustable torsion bar 27 (see Figure 7) to counteract external roll motions and/or roll moments on the vehicle. The hydraulic system 3 comprises several valves 10, 11, sensors 12, 13 and a control unit 14 for controlling a pressure level in the hydraulic rotation actuator 2.

In the illustrated embodiment, the valves include a fail-safe valve 11 arranged to cut off any supply to and from the hydraulic rotation actuator 2, in case of some failure in for instance the hydraulic lines 4, 5. The valves 10, 11 furthermore include four proportional pressure regulating valves 10 arranged in a Wheatstone configuration 100. By means of the pressure regulating valves 10, the desired pressure in the chambers I-IV of the actuator 2 is provided. The pressure of the lower left chamber I and upper right chamber III may be increased so as to generate a positive pressure difference and a positive anti-roll moment at the actuator side. By increasing the pressure in the oppositely arranged chambers II, IV, a negative anti-roll moment will be generated. When using such a Wheatstone configuration 100, a pressure difference in the chambers I-IV of the actuator 2 can be controlled by the valves 10 of said configuration 100 and/or by the hydraulic pumping means 7 and the pressure in the reservoir 6, thereby providing a further optimisation of pressure control in the hydraulic system 3.

In another embodiment of the invention it is also possible that the valves 10, 11 include a pressure control valve instead of the Wheatstone configuration 100, for controlling a pressure difference of anti-roll moment at the actuator side. The pressure control valve may for instance be a proportional control valve enabling the pressure to be controlled proportionally variable to an input command between a base pressure and a maximum pressure. To that end, the valve may include a plunger that from an open centre position is operable in two directions. In the open centre position the pressure will be substantially equal in all actuator chambers I-IV. When displacing the plunger to the right, the pressure of the lower left chamber I and upper right chamber III will increase so as to generate a positive pressure difference and a positive anti-roll moment at the actuator side. By driving the plunger to the other side, a negative anti-roll moment will be generated. In either case, the magnitude of the generated pressure difference and anti-roll moment depends on the displacement stroke of the plunger.

The hydraulic pumping means 7 may be driven by the combustion motor 8 of the vehicle. Alternatively, a separate motor may be provided, for instance an electric motor. Such motor can be relatively compact and as such offers additional design freedom as to potential built-in locations. The hydraulic pumping means 7 may comprise a drive gear and may be in rotational communication with a drive shaft to operate the hydraulic pumping means. The drive shaft is coupled to the motor 8. The hydraulic pumping means 7 is the same hydraulic pumping means that is incorporated in the hydraulic system 16 of the power steering system 15 arranged in the vehicle. Thus, one hydraulic pumping means 7 is provided for feeding both systems 1, 15. Since the hydraulic pumping means 7 transfer mechanical rotational energy into hydraulical energy, transformation losses from mechanical to hydraulic energy may be reduced by using only one hydraulic pumping means 7 for supplying hydraulic fluid H to the active roll stabilisation system 1 as well as to the power steering system 15. The hydraulic pumping means 7 is arranged in fluid connection with the hydraulic rotation actuator 2 of the active roll stabilisation system 1 via the hydraulic supply line 4 and the hydraulic return line 5. At the same time, the hydraulic pumping means 7 is arranged in fluid connection with the actuator 17 of the power steering system 15 via the hydraulic supply line 18 and the hydraulic return line 19. The hydraulic pumping means 7 is arranged for feeding hydraulic fluid H to the active roll stabilisation system 1 as well as to the power steering system 15 simultaneously. Therefore, a flow divider 9a is provided between the hydraulic pumping means 7 and the respective systems 1, 15. In the illustrated embodiment in Figure 1, the flow divider is a passive flow divider 9a that is adapted for dividing the hydraulic fluid H with a fixed division ratio between the active roll stabilisation system 1 and the power steering system 15. The passive flow divider 9a comprises two parallel communicating flow resistors 20, 21 in order to provide both systems 1, 15 with a similar flow of hydraulic fluid H irrespective of the supplied flow of hydraulic fluid H by the hydraulic pumping means 7. The ratio of the pressure drop between the resistors 20, 21 determines the actual flow ratio between the two systems 1, 15.

The power steering system 15, as illustrated in Figure 1, is a commonly known power steering system 15 for a car, comprising an actuator 17, being a cylinder comprising two cylinder chambers 17a, 17b defined by a piston 22. The cylinder 17 is adapted to actuate the steering shaft 23 when a driver of the vehicle turns the steering wheel 40.

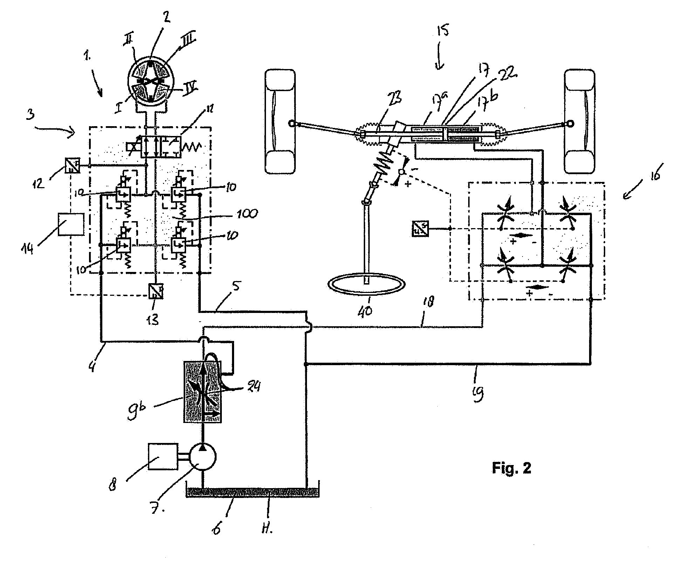

In Figure 2-4 further embodiments of an active roll stabilisation system 1 fed by a hydraulic pumping means 7 of a power steering system 15 according to the invention is schematically shown. It is noted that similar elements are indicated by similar reference numbers. The active roll stabilisation system 1 shown in Figures 2-4, as well as the power steering system 15 shown in Figure 2-4, are similar to the ones shown in Figure 1. Therefore, the description of Figure 2-4 is limited to the differences with respect to Figure 1.

In the illustrated embodiment of Figure 2, a passive flow regulator 9b is arranged between the hydraulic pumping means 7 and the active roll stabilisation system 1 and the power steering system 15. The passive flow regulator 9b is adapted for regulating the hydraulic fluid flows to the active roll stabilisation system 1 or to the power steering system 15 simultaneously. More specifically, the passive flow regulator 9b is adapted to control the flow of the hydraulic fluid H to one of the systems 1, 15. The other system 1, 15 may then be provided with the remainder of the supplied flow by the hydraulic pumping means 7. The passive flow regulator 9b may supply a predetermined hydraulic fluid flow to one of the systems, which predetermined hydraulic fluid flow is not influenced by the supply flow to the passive flow regulator 9b. If the hydraulic pumping means 7 supplies a hydraulic fluid flow to the passive flow regulator 9b which flow is smaller than the predetermined hydraulic fluid flow, the entire hydraulic fluid flow is supplied to the one system 1, 15 that is in fluid connection with the controlled outlet 24 of the passive flow regulator 9b. As illustrated in Figure 2, the controlled outlet 24 is in fluid connection with the power steering system 15, which provides a very advantageous hydraulic system 3, 16. In order to have a safely operating power steering system 15, a minimum hydraulic fluid flow to the power steering system is demanded. By connecting the power steering system 15 to the controlled outlet 24 of the passive flow regulator 9b, the demanded minimum hydraulic fluid flow is guaranteed. In case that the supplied hydraulic fluid flow by the hydraulic pumping means 7 is less than the predetermined hydraulic fluid flow that is fed to the power steering system, no hydraulic fluid flow is fed to the active roll stabilisation system 1.

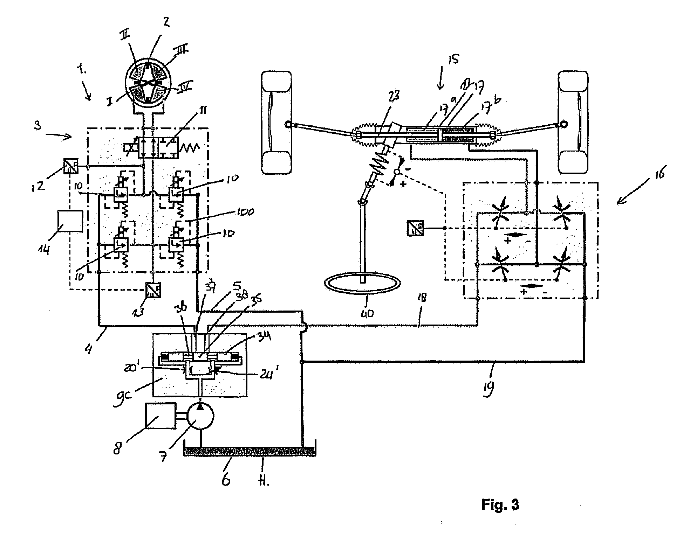

In the illustrated embodiment of Figure 3, an active flow divider 9c is arranged between the hydraulic pumping means 7 and the active roll stabilisation system 1 and the power steering system 15 for feeding hydraulic fluid to the active roll stabilisation system 1 as well as to the power steering system 15 simultaneously. The active flow divider 9c is adapted for dividing the hydraulic fluid flow H with a variable division ratio between the active roll stabilisation system 1 and the power steering system 15. This means that hydraulic fluid H may be divided to the respective systems 1, 15 according to the demand of a certain amount of hydraulic fluid H. The active flow divider 9c comprises a metering orifice for instance a flow resistor 20', arranged in the fluid connection between the hydraulic pumping means 7 and the active roll stabilisation system 1. The active flow divider 9c further comprises a controllable metering orifice 24' in the fluid connection between the hydraulic pumping means 7 and the power steering system 15. By controlling the controllable metering orifice 24', the ratio of the hydraulic fluid flows to the respective systems 1, 15 can be varied. By controlling the metering orifice 24', the predetermined amount of demanded hydraulic fluid flow to one of the systems 1, 15, in this case the power steering system 15 can be controlled actively in order to set or adapt a certain flow ratio. Such a metering orifice 24' may be controlled electrically. To be able to control the set ratio of hydraulic fluid flows in case of pressure differences in the fluid connections to the respective systems 1, 15, the active flow divider 9c may further comprise a housing 34 having a cavity 36 comprising a spool 35 that is slidably arranged in said cavity 36. The spool 35 may partially close the outlets 37, 38 to the respective systems 1, 15. For instance, if the pressure in the fluid connection to the power steering system 15 increases, the spool 35 will slide caused by a created hydraulic force and the available spring force $F_{spring}$, thereby closing the outlet to the active roll stabilisation system 1 more than the outlet 38 to the power steering system 15. The created hydraulic force is a result of pressure drops over the respective flow resistor 20' and controllable metering orifice 24', which pressure drops are caused by change in pressure in the fluid connections to the systems 1, 15. Thus, the ratio of hydraulic fluid flows can be varied by actively controlling the metering orifice 24' and the hydraulic control of the set hydraulic fluid ratio is provided similar as the control of the predetermined ratio of the afore-mentioned passive flow divider.

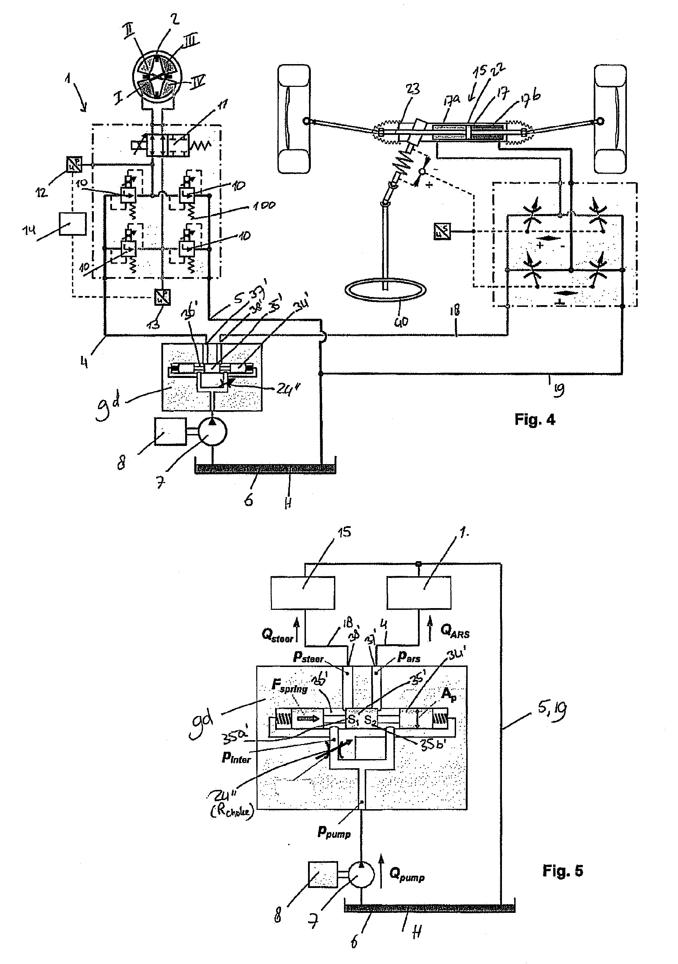

Figure 4 shows an active flow regulator 9d that is arranged between the hydraulic pumping means 7 and the active roll stabilisation system 1 and the power steering system 15 for regulating the hydraulic fluid flows to the active roll stabilisation system 1 as well as to the power steering system 15 simultaneously. The active flow regulator 9d also comprises a housing 34' comprising a spool 35' that is slidably arranged in a cavity 36' in order to partially close one of the outlets 37', 38'. The active flow regulator 9d comprises only one controllable metering orifice 24" provided in the fluid connection between the hydraulic pumping means 7 and the power steering system 15, as is further illustrated in Figure 5. The active flow regulator 9d functions as follows. The controllable metering orifice 24" is for instance electrically controllable to set or adapt a certain minimum hydraulic fluid flow to the power steering system 15. The surplus flow, being the supplied hydraulic fluid flow by the pumping means 7 minus the set minimum hydraulic fluid flow, will be provided to the active roll stabilisation system 1. If the hydraulic pumping means 7 supplies a hydraulic fluid flow to the active flow regulator 9d which flow is smaller than the set minimum hydraulic fluid flow, the entire hydraulic fluid flow is supplied to the power steering system 1 that is in fluid connection with the controlled outlet 24" of the active flow regulator 9d. In case of a change in pressure in the fluid connections to the power steering system 1 and the active roll stabilisation system 13, the active flow regulator is automatically controlled hydraulically. A pressure difference over the controllable metering orifice 24" that operates on the spool surface Ap and a spring force $F_{spring}$ provides a certain position of the spool 35', thereby generating a determined pressure drop over the spool ends 35a', 35b'. If, for instance, the pressure in the supply line 18 to the power steering system 15 increases, the pressure drop over the controllable metering orifice 24" will decrease resulting in a displacement of the spool 35' enlarging the opening at the first spool end 35a' to the outlet 37' and consequently providing a smaller opening at the second spool end 35b' to the outlet 38'. The equilibrium of the spool 35' is determined by the following equations:

$$F_{spring} = (p_{pump} - p_{inter}) \cdot A_p = R_{choke} \cdot A_p \cdot Q_{steer}$$

$$Q_{steer} = \frac{F_{spring}}{R_{choke} \cdot A_p}$$

$$Q_{ARS} = Q_p - Q_{steer}$$

When the vehicle is driving with a relatively high speed, the comfort of driving the vehicle is enhanced by the active roll stabilisation system 1. The system 1 provides that external roll motions and/or moments are counteracted by an adjustable torsion bar 27 (see Figure 7). Therefore, the active roll stabilisation system 1 demands, in that case, a relatively high flow of hydraulic fluid H to feed the hydraulic rotation actuator 2 of the system 1. The power steering system 15 on the other hand, may demand a relatively large flow of hydraulic fluid H when the vehicle is driven relatively slowly. The driver of the vehicle only needs reduction of the steering load at low speed. The use of the active flow divider 9b in the hydraulic systems 3, 16 of the active roll stabilisation system 1 and the power steering system 15 provides an efficient use of the hydraulic pumping means 7, thereby reducing the use of energy. An additional advantage of the use of such an active flow divider 9c or an active flow regulator 9d is the fact that the power steering system can be an active power steering system.

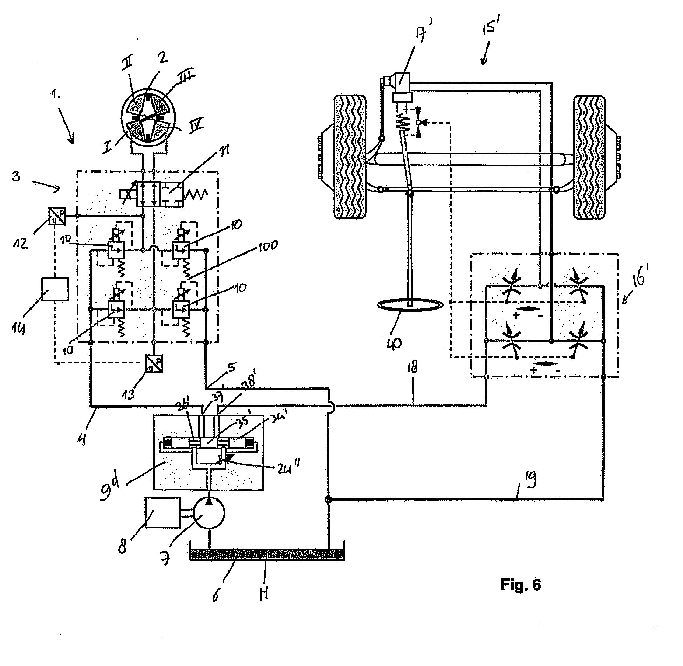

In Figure 6 a similar active roll stabilisation system 1 as in Figures 4 and 5 is shown. The illustrated embodiment only differs from the one showed in Figures 4 and 5 in that the power steering system 15' in this embodiment is a power steering system 15' which is adapted for use in a truck. The power steering system 15' comprises an actuator 17' that is fed by the hydraulic system 16 in order to enhance steering comfort when turning the steering wheel 40.

Figure 7 shows an advantageous embodiment of an active roll stabilisation system 1. The shown active roll stabilisation system 1 is a compact system comprising an adjustable torsion bar 27 and an additional torsion bar 28. The adjustable torsion bar 27 comprises a rod or substantially tubular shaped centre part 29 and two arms 30, 31, which in use may be pivotally connected to a left and right side of a vehicle suspension system (not shown). The centre part 29 of the adjustable torsion bar 27 is at least partially surrounded by the additional torsion bar 28. Thus, concentrically arranged within said additional torsion bar 28 (see cross section A-A). The adjustable torsion bar 27 comprises a hydraulic rotation actuator 2, which divides the adjustable torsion bar 27 in two segments 32, 33. These segments 32, 33 are rotatable relative to each other around a torsion axis T1 in order to adjust a torsion angle and/or a torsion moment of the adjustable torsion bar 27. This enables the adjustable torsion bar 27 to counteract external roll motions and/or roll moments, which during use may act on said system 1, for instance when the vehicle turns.

This active roll stabilisation system 1 is of a very compact design, which further provides a better design freedom of the overall vehicle design. The hydraulic rotation actuator 2 is fed by a hydraulic system 3 as described before and shown in Figures 1-6. It is of course also possible that the active roll stabilisation system 1 comprises a different construction but uses a hydraulic system 3 as described before.

The invention is not in any way limited to the exemplary embodiments presented in the description and drawings. All combinations (of parts) of the embodiments shown and described are explicitly understood to fall within the scope of the invention. Moreover, many variations are possible within the scope of the invention, as outlined by the claims. For instance, the hydraulic system may be a different system comprising different elements. Furthermore, the adjustable torsion bar may be of a different construction as described and shown in Figure 3. Also no additional torsion bar may be provided or the additional torsion bar may be of a different design. Furthermore, the hydraulic rotation actuator may for instance be provided on a different location compared to the adjustable torsion bar. Instead of a hydraulic rotation actuator, also a linear actuator may be used, which is provided in series with a commonly known passive torsion bar, wherein the linear actuator is for instance provided at the end of one of the arms of the passive torsion bar. It is also possible that different kinds of flow dividers or flow regulators may be used to divide the hydraulic fluid between the active roll stabilisation system and the power steering system. The hydraulic pumping means may be of a different kind as well as the motor driving said hydraulic pumping means, as long as the hydraulic pumping means is adapted to feed the respective actuators of the active roll stabilisation system and the power steering system. Furthermore, the power steering system can be a different power steering system then the one described, but still arranged to reduce steering load for the driver.

**Claims**

**1.** Active roll stabilisation (ARS) system for use in a vehicle, comprising an adjustable torsion bar adjustable by means of a hydraulic actuator and a hydraulic system comprising a hydraulic pumping means in fluid connection with said hydraulic actuator for feeding said hydraulic actuator, **characterised in that** the hydraulic pumping means is a hydraulic pumping means that is incorporated in a hydraulic system of a power steering system arranged in said vehicle.

2.  System according to claim 1, wherein the hydraulic pumping means is in fluid connection with the actuator of the active roll stabilisation system and in fluid connection with an actuator of the power steering system, wherein the hydraulic pumping means is arranged for feeding hydraulic fluid to the active roll stabilisation system as well as to the power steering system.

3.  System according to claim 1 or 2, wherein in the fluid connection between the hydraulic pumping means and the active roll stabilisation system and the power steering system, a flow divider or a flow regulator is provided for dividing or respectively regulating hydraulic fluid flows to said systems.

4.  System according to claim 3, wherein the flow divider is a passive flow divider adapted for dividing the hydraulic fluid with a fixed division ratio between the active roll stabilisation system and the power steering system.

5.  System according to claim 3, wherein the flow regulator is a passive flow regulator adapted for regulating the hydraulic fluid flow to one of the active roll stabilisation system or the power steering system, wherein a surplus flow will be supplied to the other one of the active roll stabilisation system or the power steering system.

6.  System according to claim 3, wherein the flow divider is an active flow divider adapted for dividing the hydraulic fluid with a variable division ratio between the active roll stabilisation system and the power steering system.

7.  System according to claim 6, wherein the active flow divider comprises a metering orifice in each respective fluid connection between the hydraulic pumping means and said respective systems, wherein at least one metering orifice is a controllable metering orifice.

8.  System according to claim 3, wherein the flow regulator is an active flow regulator adapted for regulating the hydraulic fluid flow to one of the active roll stabilisation system or the power steering system, wherein a surplus flow will be supplied to the other one of the active roll stabilisation system or the power steering system.

9.  System according to claim 8, wherein the active flow regulator comprises a controllable metering orifice in one of the fluid connections between the hydraulic pumping means and the respective systems, preferably between the hydraulic pumping means and the power steering system.

10. System according to any one of claims 6-9, wherein the active flow divider or the active flow regulator is controllable in dependence of driving speed of the vehicle, in dependence of pumping speed of the hydraulic pumping means and/or in dependence of steering speed.

11. System according to any one of claims 6-10, wherein the active flow divider or the active flow regulator is arranged to control the hydraulic supply flow to the power steering assembly.

12. System according to any one of the preceding claims, wherein a power source for driving the hydraulic pumping is a combustion engine that is arranged for driving the vehicle, or a separately provided electric motor in the vehicle.

13. System according to any one of the preceding claims, wherein the active roll stabilisation assembly comprises an additional torsion bar parallel to the adjustable torsion bar, preferably concentrically arranged within said torsion bar.

14. Active flow divider for use in a hydraulic system for supplying hydraulic fluid to a power steering system and an active roll stabilisation system, **characterised in that** said active flow divider comprises an inlet adapted to be connected to a hydraulic pumping means and two outlets in fluid connection with said inlet adapted to be connected to a power steering system and to an active roll stabilisation system, wherein in both fluid connections between the inlet and the respective outlets a metering orifice is provided, wherein at least one of the orifices is controllable.

15. Active flow regulator for use in a hydraulic system for supplying hydraulic fluid to a power steering system and an active roll stabilisation system, **characterised in that** said active flow regulator comprises an inlet adapted to be connected to a hydraulic pumping means and two outlets adapted to be connected to a power steering system and an active roll stabilisation system, wherein between the inlet and at least one of the outlets a controllable metering orifice is provided.

16. Vehicle comprising an active roll stabilisation system according to any one of claims 1-13.

**Fig. 1**

Fig. 2

Fig. 3

Fig. 4

Fig. 5

Fig. 6

Fig. 7

**European Patent Office**

## EUROPEAN SEARCH REPORT

Application Number

EP 07 12 1985

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 311 524 A (PEUGEOT [FR]; CITROEN SA [FR]) 12 April 1989 (1989-04-12) * column 2, line 24 - line 46; figure 1 * ----- | 1-4,12, 16 | INV. B60G17/015 B60G21/055 B62D5/07 |
| X | US 4 844 506 A (MORIGUCHI KOICHI [JP] ET AL) 4 July 1989 (1989-07-04) * column 5, line 55 - column 6, line 22; figure 3 * ----- | 1-4,12, 16 | |
| X | US 5 549 328 A (CUBALCHINI JOSEPH [US]) 27 August 1996 (1996-08-27) * column 3, line 39 - line 49; figure 3 * ----- | 1-3, 6-12,15, 16 | |
| X | US 2005/146098 A1 (GREEN STEVE J [US] ET AL) 7 July 2005 (2005-07-07) * paragraph [0072] - paragraph [0073]; figures 9,13 * ----- | 1-3,5, 12,16 | |
| X | US 5 529 324 A (KRAWCZYK GREGORY J [US] ET AL) 25 June 1996 (1996-06-25) * column 7, line 9 - line 21; figure 3 * ----- | 1-3,6-8, 10-12, 14-16 | TECHNICAL FIELDS SEARCHED (IPC) B60G B62D |
| X | US 5 597 180 A (GANZEL BLAISE J [US]) 28 January 1997 (1997-01-28) * column 4, line 40 - column 5, line 7; figure 2 * ----- | 1-3,6, 8-12,15, 16 | |
| X | US 5 480 186 A (SMITH GARRY R [US]) 2 January 1996 (1996-01-02) * abstract; figure 1 * ----- | 1 | |
| X | US 4 892 329 A (KOZAKI TETSUJI [JP] ET AL) 9 January 1990 (1990-01-09) * abstract; figure 1 * ----- | 1 | |

-/--

~~The present search report has been drawn up for all claims~~

| Place of search | Date of completion of the search | Examiner |
|---|---|---|
| Berlin | 22 August 2008 | Wiberg, Sten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office** EUROPEAN SEARCH REPORT

Application Number

EP 07 12 1985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 63 275418 A (TOYOTA MOTOR CORP) 14 November 1988 (1988-11-14) * abstract; figure 1 * ----- | 1 | |
| X | US 2 802 674 A (JACKSON GEORGE W) 13 August 1957 (1957-08-13) * claim 1; figure * ----- | 1 | |
| A | EP 0 933 240 A (ROVER GROUP [GB] LAND ROVER GROUP LTD [GB]) 4 August 1999 (1999-08-04) * paragraph [0018]; figure 2 * ----- | 1 | |
| A | JP 09 030235 A (KAYABA INDUSTRY CO LTD) 4 February 1997 (1997-02-04) * abstract; figure 1 * ----- | 1 | |
| A | DE 10 2004 002550 A1 (PORSCHE AG [DE]) 4 August 2005 (2005-08-04) * abstract; figure 1 * ----- | 1 | TECHNICAL FIELDS SEARCHED (IPC) |

~~The present search report has been drawn up for all claims~~

| Place of search | Date of completion of the search | Examiner |
|---|---|---|
| Berlin | 22 August 2008 | Wiberg, Sten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ........................................................................

& : member of the same patent family, corresponding document

EPO FORM 1503 03.82 (P04C01)

European Patent
Office

Application Number

EP 07 12 1985

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-12, 14-16

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

EP 2 065 231 A1

**European Patent Office** | LACK OF UNITY OF INVENTION SHEET B | Application Number

EP 07 12 1985

The Search Division considers that the present European patent application does not comply with the requirements of unity of invention and relates to several inventions or groups of inventions, namely:

```
1. claims: 1-5, 12, 16

        The problem of passively dividing the flow solved by the
        special technical feature of using a passive flow divider.
                              ---

2. claims: 6-11, 14, 15

        The problem of actively dividing the flow is solved by the
        special technical feature of using an active flow divider.
                              ---

3. claim: 13

        The problem of increasing the stiffness is solved by the
        special technical feature of using an additional torsion
        bar.
                              ---
```

**ANNEX TO THE EUROPEAN SEARCH REPORT
ON EUROPEAN PATENT APPLICATION NO.**

EP 07 12 1985

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2008

| Patent document cited in search report | | Publication date | Patent family member(s) | | Publication date |
|---|---|---|---|---|---|
| EP 0311524 | A | 12-04-1989 | DE | 3876066 D1 | 24-12-1992 |
| | | | DE | 3876066 T2 | 19-05-1993 |
| | | | FR | 2621535 A1 | 14-04-1989 |
| US 4844506 | A | 04-07-1989 | DE | 3785468 D1 | 27-05-1993 |
| | | | DE | 3785468 T2 | 29-07-1993 |
| | | | EP | 0234808 A2 | 02-09-1987 |
| US 5549328 | A | 27-08-1996 | NONE | | |
| US 2005146098 | A1 | 07-07-2005 | NONE | | |
| US 5529324 | A | 25-06-1996 | NONE | | |
| US 5597180 | A | 28-01-1997 | NONE | | |
| US 5480186 | A | 02-01-1996 | NONE | | |
| US 4892329 | A | 09-01-1990 | JP | 1136806 A | 30-05-1989 |
| | | | JP | 1995671 C | 08-12-1995 |
| | | | JP | 7017142 B | 01-03-1995 |
| JP 63275418 | A | 14-11-1988 | NONE | | |
| US 2802674 | A | 13-08-1957 | NONE | | |
| EP 0933240 | A | 04-08-1999 | DE | 69911079 D1 | 16-10-2003 |
| | | | DE | 69911079 T2 | 15-07-2004 |
| | | | GB | 2333746 A | 04-08-1999 |
| | | | US | 6394240 B1 | 28-05-2002 |
| JP 9030235 | A | 04-02-1997 | JP | 3705847 B2 | 12-10-2005 |
| DE 102004002550 | A1 | 04-08-2005 | AT | 389554 T | 15-04-2008 |
| | | | EP | 1580046 A2 | 28-09-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1175307 A